(19) Europäisches Patentamt
European Patent Office
Office européen des brevets

(11) **EP 1 821 093 B1**

(12) **FASCICULE DE BREVET EUROPEEN**

(45) Date de publication et mention de la délivrance du brevet:
**04.04.2018 Bulletin 2018/14**

(51) Int Cl.:
***G01N 15/08*** (2006.01)

(21) Numéro de dépôt: **07101753.7**

(22) Date de dépôt: **05.02.2007**

(54) **Procédé et dispositif de mesure de perméation**

Verfahren und Vorrichtung zur Permeationsmessung

Method and device for measuring permeation

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **15.02.2006 FR 0601320**
**11.04.2006 US 402230**

(43) Date de publication de la demande:
**22.08.2007 Bulletin 2007/34**

(60) Demande divisionnaire:
**13176044.9 / 2 682 736**

(73) Titulaire: **Commissariat à l'Énergie Atomique et aux Énergies Alternatives**
**75015 Paris (FR)**

(72) Inventeurs:
• **Firon, Muriel**
**91520, EGLY (FR)**
• **Cros, Stéphane**
**73000, CHAMBERY (FR)**
• **Trouslard, Philippe**
**78460, CHEVREUSE (FR)**

(74) Mandataire: **Regimbeau**
**87 rue de Sèze**
**69477 Lyon Cedex 06 (FR)**

(56) Documents cités:
WO-A-02/088657     JP-A- S63 172 942
US-A- 5 131 261     US-A- 5 265 463
US-A1- 2003 001 086     US-A1- 2004 123 646

• **PATENT ABSTRACTS OF JAPAN vol. 012, no. 280 (P-739), 2 août 1988 (1988-08-02) & JP 63 061141 A (SHIMADZU CORP), 17 mars 1988 (1988-03-17)**

EP 1 821 093 B1

**Description**

DOMAINE DE L'INVENTION

La présente invention concerne le domaine de la perméation de gaz, et plus particulièrement un dispositif et une méthode de mesure de perméation de gaz à travers des matériaux solides.

ETAT DE LA TECHNIQUE

La sélection de matériaux pour certaines applications, telles que le conditionnement ou l'électronique par exemple, nécessite l'étude de la perméation de certains gaz à travers ces matériaux. Par perméation, on entend le mécanisme de passage d'un gaz à travers un matériau suivant les étapes d'absorption du gaz dans le matériau, de diffusion de ce gaz à travers le matériau, et de désorption du gaz de l'autre côté du matériau. Par exemple, les mesures de perméation de gaz comme l'oxygène ou la vapeur d'eau, à travers les matériaux à sélectionner, sont les plus répandues.

Dans le cas des matériaux destinés au conditionnement agroalimentaire par exemple, l'étude de la perméation des gaz courants à travers les matériaux, et plus particulièrement de l'oxygène et de la vapeur d'eau, sont critiques. Les niveaux requis de perméabilité à ces gaz sont extrêmement faibles, et l'étude de la perméation nécessite par conséquent des dispositifs de mesure de perméation présentant des sensibilités importantes.

En réponse à cette problématique, de nombreux dispositifs de mesure de perméation ont été développés, reposant sur divers principes de suivi de gaz, et présentant chacun leurs inconvénients.

Il a été en particulier développé un dispositif de mesure des flux de perméation d'$O_2$, Ar, ou He, comprenant une enceinte de mesure sous ultravide. La sensibilité de cette méthode de mesure est néanmoins limitée par le niveau de pollution résiduelle du gaz suivi dans l'enceinte de mesure sous vide, l'oxygène et la vapeur d'eau présents dans l'atmosphère étant naturellement parmi les polluants les plus importants, même dans une enceinte sous vide.

Pour remédier à cet inconvénient majeur, il a été proposé d'utiliser, pour un gaz cible dont on cherche à connaître la perméation à travers le matériau, un gaz isotopique de ce gaz cible, c'est-à-dire ayant un nombre de masse différent. Ainsi, en utilisant par exemple un spectromètre de masse comme analyseur dans l'enceinte de mesure, il est possible de réduire les seuils de détection de la perméation de plusieurs ordres de grandeur. En effet, l'abondance isotopique naturelle de ces éléments étant très faible, la pollution de l'enceinte par ces espèces est d'autant moins importante.

Cette dernière méthode de mesure permet d'augmenter la sensibilité des mesures de perméation. Néanmoins, les temps de mesures pour des gaz cibles tels que la vapeur d'eau ou l'oxygène ne sont nullement améliorés au regard des méthodes classiques. En effet, ces méthodes ne permettent de mesurer que la perméabilité d'un gaz cible à travers un film. Les films étant très fragiles, notamment ceux comportant un revêtement en couche mince, toute manipulation risque de provoquer une altération des propriétés de barrière du film (par exemple par une rayure). Le changement de gaz cible, s'il implique une modification du dispositif instrumental, conduit souvent à changer de film pour chaque mesure, d'où un manque de reproductibilité et de fiabilité des mesures.

Un but de la présente invention est donc de proposer un dispositif et un procédé de mesure de perméation amélioré, alliant notamment sensibilité et gain en temps de mesure.

EXPOSE DE L'INVENTION

A cet effet, on prévoit selon l'invention un procédé de mesure de perméation de gaz à travers un matériaux selon la revendication 1. La formation préalable d'un mélange de gaz dans l'enceinte de mélange va permettre de remplir la première chambre avec un mélange comprenant plusieurs gaz isotopiques, correspondant à autant de gaz cibles dont on cherche à étudier la perméation à travers le matériau. Ainsi, tous les gaz isotopiques du mélange vont traverser le matériau et le moyen d'analyse va donc également pouvoir analyser de manière simultanée les gaz ayant traversé.

Le premier avantage conféré par cette simultanéité des analyses réside dans les temps de mesure qui sont réduits par autant qu'il y a de gaz à analyser. Cette considération prend toute sa valeur quand on sait que la mesure de la perméation de l'$O_2$ par exemple à travers un matériau peut prendre plusieurs jours, voire mois, selon la perméabilité du matériau.

De plus, cette simultanéité des mesures permet de mettre en évidence une éventuelle interdépendance entre l'adsorption notamment de vapeur d'eau par un film et la perméabilité de ce film à un ou plusieurs autres gaz. En effet, l'adsorption de vapeur d'eau est susceptible de modifier les propriétés de diffusion d'un autre gaz, par exemple l'oxygène, à travers un film. On ne se contente plus de fixer le taux d'hygrométrie durant des mesures de perméation à l'oxygène, mais on effectue des mesures simultanées de perméation à la vapeur d'eau et à l'oxygène.

En outre, les conditions expérimentales dans lesquelles les mesures sont effectuées (notamment en termes de température, dégradation du matériau, etc.) sont identiques pour chaque gaz puisque les analyses sont faites en parallèle, et rend donc les analyses de perméation pour un matériau particulier beaucoup plus fiables.

Des aspects préférés mais non limitatifs du procédé selon l'invention sont les suivants :

- on remplit l'enceinte de mélange avec un gaz isoto-

pique choisi parmi $^{18}O_2$ et $^{17}O_2$ lorsque l'un des gaz cibles est $^{16}O_2$ ;

- l'étape de remplissage de la première chambre consiste à faire le vide dans la première chambre avec un premier moyen de pompe, puis à ouvrir l'enceinte de mélange pour remplir la première chambre avec le mélange de gaz isotopiques ;

- le procédé comprend en outre une étape de régulation thermique préalable à l'étape d'analyse, l'étape de régulation thermique consistant à réguler la température de l'enceinte de perméation et de l'enceinte de mélange avec un moyen de régulation thermique ;

- l'étape d'analyse consiste à déterminer simultanément la présence de gaz isotopiques dans la deuxième chambre avec un analyseur de gaz placé dans une enceinte de mesure, l'enceinte de mesure étant reliée à la deuxième chambre et mise sous vide continu avec un deuxième moyen de pompe ;

- le procédé comprend en outre une étape préalable à l'étape d'analyse consistant à mettre sous vide la deuxième chambre et l'enceinte de mesure avec le deuxième moyen de pompe ;

- le procédé comprend en outre une étape de récupération des gaz consistant à, une fois l'analyse de perméation terminée, récupérer le mélange de gaz de la première chambre et l'acheminer vers un moyen de filtrage pour assécher les gaz du mélange ;

- l'étape de récupération des gaz comprend en outre une étape consistant à piéger les gaz asséchés du mélange dans la source de gaz correspondante avec un moyen de récupération du gaz considéré ;

- le procédé comprend en outre une étape préalable de test, consistant remplir la première chambre avec de l'hélium, et à calculer la perméation du matériau à l'hélium, pour effectuer une présélection du matériau en excluant le matériau des analyses ultérieures si la perméation du matériau à l'hélium est supérieure à un seuil déterminé.

On prévoit également selon l'invention un dispositif de mesure de perméation de gaz à travers un matériau selon la revendication 10. Des aspects préférés mais non limitatifs du dispositif selon l'invention sont les suivants :

- le dispositif comprend en outre une ligne d'alimentation en gaz comprenant une première et une deuxième extrémité, la première extrémité étant reliée à au moins une source de gaz isotopique, et la deuxième extrémité étant reliée à la première chambre et à l'enceinte de mélange pour remplir la première chambre et/ou l'enceinte de mélange ;

- la ligne d'alimentation est reliée à l'enceinte de mélange, à la première chambre, et à la source de gaz respectivement par l'intermédiaire d'une première vanne, d'une deuxième vanne, et d'une troisième vanne ;

- la source de gaz est en outre reliée à un moyen de récupération du gaz considéré, le moyen de récupération pouvant être un piège cryogénique ;

- la ligne d'alimentation est en outre reliée à un moyen de filtrage pour assécher les gaz circulant dans la ligne d'alimentation, le moyen de filtrage pouvant être un tamis moléculaire pour piéger les molécules d'eau des gaz circulant dans la ligne d'alimentation ;

- le moyen de filtrage comprend une entrée et une sortie, l'entrée et la sortie étant respectivement reliées à la ligne d'alimentation par l'intermédiaire d'une quatrième et d'une cinquième vanne, la ligne d'alimentation comprenant en outre une sixième vanne placée entre la quatrième et la cinquième vanne pour court-circuiter la ligne d'alimentation ;

- la ligne d'alimentation comprend en outre une septième vanne interposée au niveau de la deuxième extrémité avant les première et deuxième vannes pour isoler la ligne d'alimentation de l'enceinte de mélange et de la première chambre de l'enceinte de perméation ;

- la ligne d'alimentation est en outre reliée, par l'intermédiaire d'une huitième vanne, à une réserve de gaz qui pourra être une bouteille d'hélium équipée d'un manomètre détendeur ;

- la ligne d'alimentation est en outre reliée, au niveau de la première extrémité, par l'intermédiaire d'une neuvième vanne, à un premier moyen de pompe pour faire le vide dans la ligne d'alimentation ;

- le moyen de régulation de phase pouvant être un module à effet Pelletier régulant la température d'une solution saline saturée d'eau deutérée ;

- le dispositif comprend en outre un moyen de régulation thermique pour réguler la température de l'enceinte de perméation et l'enceinte de mélange ;

- le moyen d'analyse comprend un analyseur placé dans une enceinte de mesure comprenant une première et une deuxième extrémité, la première extrémité étant reliée à la deuxième chambre, et la deuxième extrémité étant reliée à un deuxième moyen de pompe pour mettre l'enceinte de mesure sous vide ;

- la première extrémité de l'enceinte de mesure est reliée à la deuxième chambre par l'intermédiaire d'une dixième vanne ;

- le deuxième moyen de pompe comprend une pompe primaire et une pompe secondaire placées en série ; le deuxième moyen de pompe est relié à la deuxième extrémité de l'enceinte de mesure par l'intermédiaire d'une onzième vanne ;

- l'analyseur est un spectromètre de masse, le spectromètre de masse pouvant être positionné sur le chemin du flux de gaz entre la deuxième chambre et les pompes.

Enfin, on prévoit selon l'invention un procédé d'utilisation d'un tel dispositif de mesure de perméation, caractérisé en ce qu'il comprend les étapes consistant à :

■ Mettre en place un film échantillon d'un matériau à mesurer dans l'enceinte de perméation, et fermer toutes les vannes du dispositif ;

■ Ouvrir la dizième et la onzième vannes et mettre la deuxième chambre sous vide avec le deuxième moyen de pompe ;

■ Mettre en place la solution saline saturée d'eau deutérée dans l'enceinte de mélange et geler la solution avec le module à effet Pelletier ;

■ Ouvrir les première, deuxième, quatrième, cinquième, sixième, septième, et neuvième vannes et mettre sous vide la première chambre, la ligne d'alimentation, l'enceinte de mélange, et le moyen de filtrage avec le premier moyen de pompe ;

■ Fermer les deuxième, quatrième, cinquième, et neuvième vannes ;

■ Ouvrir la troisième vanne pour remplir l'enceinte de mélange avec un gaz isotopique de la source de gaz isotopique ;

■ Fermer la première vanne et récupérer le gaz isotopique de la ligne d'alimentation avec le moyen de récupération ;

■ Fermer les troisième, sixième, et septième vannes et laisser le mélange s'équilibrer ;

■ Ouvrir les première et deuxième vannes et calculer simultanément la perméation du matériau à chacun des gaz cibles avec le moyen d'analyse.

Ce procédé d'utilisation peut en outre comprendre les étapes consistant à :

■ Geler la solution saline avec le module à effet Pelletier ;

■ Fermer la sixième vanne et ouvrir les troisième, quatrième, cinquième, et septième vannes, et assécher les gaz avec le moyen de filtrage ;

■ Récupérer les gaz asséchés avec le moyen de récupération et fermer la troisième vanne.

DESCRIPTION DES FIGURES

D'autres caractéristiques et avantages de l'invention ressortiront encore de la description qui suit, laquelle est purement illustrative et non limitative et doit être lue en regard des dessins annexés, sur lesquels :

- la figure 1 est un schéma de principe illustrant le dispositif de mesure de perméation selon l'invention ;
- la figure 2 est une vue en coupe du mécanisme de fixation d'un film dans le dispositif de perméation selon l'invention ;
- la figure 3 est une vue de dessus du mécanisme de la figure 2 ;
- la figure 4 représente des courbes illustrant un exemple de mesure combinée.

DESCRIPTION DETAILLEE DE L'INVENTION

Le processus de perméation d'un gaz à travers un matériau M repose sur les différences de pressions partielles de ce gaz, appelé aussi perméant, de part et d'autre du matériau M, échantillonné de manière générale sous la forme d'un film F.

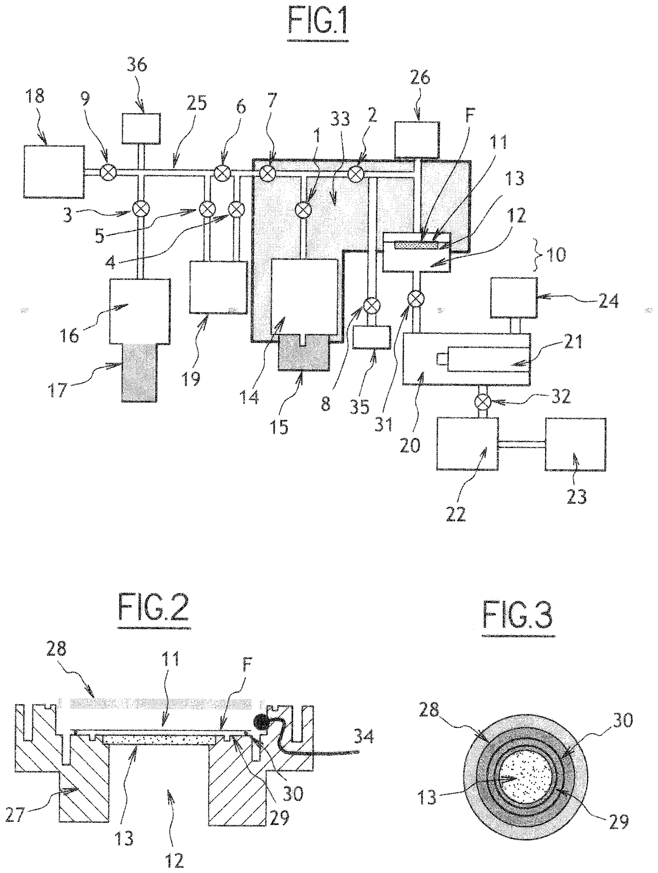

Le perméamètre, dont le schéma de principe est illustré à la figure 1, comprend une enceinte de perméation 10 qui comprend une première chambre 11 et une deuxième chambre 12 séparées par le film F de matériau M. Pour l'étude des différences de pressions partielles du perméant entre la première chambre 11, située en amont dans le dispositif, et la deuxième chambre 12, située en aval dans le dispositif, il est important d'assurer une pression partielle avale nulle, ou négligeable, par rapport à la pression amont. Une atmosphère contrôlée, avec une pression amont déterminée en perméant(s), est réalisée au dessus du film à tester. En dessous du film, la deuxième chambre 12, dans laquelle un vide poussé est maintenu, permet d'assurer la condition de pression avale nulle, ou négligeable, au regard de la pression amont.

Afin d'éviter une déformation excessive du film F, l'enceinte de perméation 10 comprend un moyen support 13, tel qu'un fritté métallique poreux. Le film F repose ainsi sur ce moyen de support 13 qui est disposé entre la première chambre 11 et la deuxième chambre 12, et est formé de manière à permettre une transmission des gaz.

Les figures 2 et 3 illustrent un mécanisme de fixation qui peut être prévu à l'intérieur de l'enceinte de perméation pour fixer un film échantillon F dans l'enceinte de perméation 10.

Le mécanisme de fixation comprend une armature 27 ayant sensiblement une symétrie de révolution et présentant une ouverture traversante selon l'axe de révolution. L'armature 27 est formée de manière à pouvoir recevoir le fritté métallique 13 pour séparer la première chambre 11 de la deuxième chambre 12. Le fritté métallique 13 pourra par exemple avoir une forme de disque, ce disque étant supporté par une partie coudée prévue sur la périphérie interne de l'armature 27. Le film échantillon F de matériau M est ensuite posé sur ce fritté métallique 13. On prévoira par exemple un disque échantillon ayant une surface supérieure à la surface du fritté métallique 13 de façon à pouvoir recouvrir entièrement le fritté métallique 13. En pratique, la dimension du film échantillon F est de l'ordre de 12 cm$^2$.

En outre, pour assurer une parfaite étanchéité entre la première chambre 11 et la deuxième chambre 12, on prévoit des joints disposés entre le fritté métallique 13 et le film échantillon F, sur la périphérie du film échantillon F. Un anneau de serrage 28 vient en appui contre le film F pour compresser les joints et assurer l'étanchéité entre la première chambre 11 et la deuxième chambre 12. On utilisera par exemple un joint torique 29 et un joint indium 30.

En aval du film F, connecté à la deuxième chambre 12, on prévoit un moyen d'analyse adapté pour suivre la pression partielle avale en perméant(s). Le moyen d'analyse du dispositif de mesure comprend une enceinte de mesure 20 raccordée à la deuxième chambre 12 par l'intermédiaire d'une vanne 31 permettant d'isoler, si nécessaire, l'enceinte de mesure 20 de la deuxième chambre 12. Cette enceinte de mesure 20 est mise sous vide par un système de pompage comprenant une pompe primaire 23 et une pompe secondaire 22, qui sont préférentiellement placées en série l'une par rapport à l'autre. L'enceinte de mesure et le système de pompage sont reliés par l'intermédiaire d'une vanne 32.

En outre, le moyen d'analyse comprend un analyseur 21 de gaz résiduels placés dans l'enceinte de mesure 20 sous vide, et disposé de manière à pouvoir analyser avec la meilleure sensibilité possible les gaz provenant de la deuxième chambre 12 avant d'être aspirés par les pompes 22 et 23. L'analyseur 21 pourra par exemple être un spectromètre de masse placé dans une enceinte de mesure 20 mise sous vide par une pompe primaire sèche 23 et une turbo pompe 22 placées en série. Pour une meilleure sensibilité, le spectromètre est positionné sur le chemin du flux de gaz entre la deuxième chambre 12 et les pompes 22 et 23. Un capteur de pression 24 peut également être prévu pour mesurer la pression totale régnant au sein de l'enceinte de mesure 20.

Le spectromètre de masse 21 utilisé ne peut fonctionner qu'à basses pressions, et nécessite donc une enceinte de mesure 20 sous un vide secondaire (de l'ordre de $10^{-4}$ torr maximum). De ce fait, on pompe en permanence l'enceinte de mesure 20 avec les pompes 22 et 23 pendant le transfert des gaz par perméation à travers le film échantillon F. Ainsi, la pression partielle de chacun des gaz ayant traversé l'échantillon augmente jusqu'à se stabiliser lorsque le flux de perméation devient égal au flux pompé. Le spectromètre de masse 21 délivre un signal qui est un courant résultant de l'ionisation des atomes d'une espèce mesurée, qui est proportionnel à la pression partielle de cette espèce. Le pompage étant efficace et la perméation des échantillons faible, la pression de stabilisation est également très faible de sorte que l'on peut considérer que la pression sur la face avale du film échantillon F reste quasi nulle au cours du temps. Le flux d'un perméant à travers le film échantillon F est donc proportionnel à la pression partielle du perméant suivi quand le régime permanent est atteint. Pour des flux de perméation extrêmement bas, la fermeture de la vanne 32 permettra une mesure cumulative dans la limite de pression totale fixée par le moyen d'analyse 21 soit de l'ordre de $10^{-4}$ torr ce qui permettra de respecter le critère de pression avale négligeable au regard de la pression amont.

A partir du flux de perméation ainsi calculé, on pourra en déduire la perméabilité du matériau M au gaz considéré en considérant l'épaisseur e du film échantillon F.

En outre, l'examen des flux de perméation cumulés sur l'ensemble de l'expérience permet d'obtenir le coefficient de diffusion selon la méthode connue du « time-lag ». Cette méthode consiste à tracer le cumul du flux de perméation d'un gaz en fonction du temps, et à réaliser une extrapolation de la régression linéaire à cumul nul à partir des valeurs correspondant au régime permanent. Le temps $T_L$ obtenu est directement lié au coefficient de diffusion D par la formule suivante :

$$D = \frac{e^2}{6.T_L}$$

La sensibilité des mesures est déterminée par le niveau de pollution résiduelle de la masse suivie par spectrométrie dans l'enceinte de mesure 20 sous vide. L'eau $H_2O$ et l'oxygène $O_2$, ayant respectivement des nombres de masse de 18 et 32, sont naturellement parmi les polluants les plus importants, et sont pourtant les espèces les plus importantes dans l'étude de la perméation à travers un matériau M. Pour s'affranchir de ce problème de pollution résiduelle, que ce soit pour l'eau ou pour l'oxygène, mais aussi pour les autres gaz à étudier, on effectue les mesures à l'aide de gaz isotopiques, comme par exemple le deutérium ($D_2O$) pour la vapeur d'eau, avec un nombre de masse de 20, et l'oxygène 18 C$^{18}O_2$) pour l'oxygène, avec un nombre de masse de 36.

Comme on l'a précisé plus haut, il est nécessaire, pour connaître la perméabilité d'un matériau M à un gaz particulier, d'atteindre un régime permanent pendant l'analyse. Or, pour des gaz tels que la vapeur d'eau ou l'oxygène, ce régime permanent, pour être atteint, peut nécessiter des temps longs lorsque les propriétés barrières du matériau M sont importantes. Ainsi, la caractérisation complète d'un matériau M quant à sa perméation par rapport à un ensemble de gaz considérés, et notamment la perméation de l'oxygène et la vapeur d'eau, peut prendre plusieurs semaines.

Dans un processus de sélection d'un matériau M pour une utilisation ultérieure en tant que matériau pour de l'encapsulation par exemple, une solution pourra consister à réaliser une présélection du matériau en mesurant la perméation de l'hélium He à travers le matériau considéré. En effet, l'hélium interagissant peu avec le matériau et ayant un faible rayon moléculaire, il possède des temps de diffusions courts, ce qui réduit d'autant les temps de mesure puisque le régime permanent est atteint beaucoup plus rapidement, généralement en quelques minutes, voire quelques heures pour les matériaux les plus performants en termes de propriétés barrières. Mêmes si les mécanismes de perméation de l'hélium diffèrent très sensiblement de ceux de la vapeur d'eau ou de l'oxygène, les mesures hélium définissent grossièrement les propriétés barrières du matériau et affinent la sélection des matériaux nécessitant des mesures de perméation à la vapeur d'eau et/ou à l'oxygène. Par exemple, si l'on cherche des matériaux présentant des perméabilités aux gaz très faibles (comme c'est le cas pour l'encapsulation où les flux respectifs acceptables en vapeur d'eau et en oxygène s'établissent à $10^{-6}$ g/m$^2$.j et $10^{-3}$ g/m$^2$.j), alors il n'est pas nécessaire de faire les mesures complémentaires quand la perméabilité du matériau à l'hélium est importante. La mesure de la perméation de l'hélium permet donc une présélection qui pourra éviter de réaliser les mesures ultérieures de la perméabilité du matériau à la vapeur d'eau et à l'oxygène qui sont très longues. Cette solution comporte néanmoins l'inconvénient de ne pouvoir être applicable que lors d'un processus de sélection de matériau, et ne permettra pas de réduire les temps de mesure dans les cas où la caractérisation complète du matériau à étudier, et notamment en termes de perméation de l'eau et de l'oxygène, est à réaliser. Pour ce faire, on utilisera par exemple une réserve de gaz 35 qui pourra être une bouteille d'hélium équipée d'un manomètre détendeur, cette réserve de gaz 35 étant reliée à la ligne d'alimentation 25 par l'intermédiaire d'une huitième vanne. L'injection d'hélium dans la ligne de gaz 25 se fera directement par la réserve 35 après ouverture de la vanne 8 et fermeture de la vanne 2. La mesure de la pression injectée se fera à l'aide du moyen de contrôle de pression 26. La solution proposée par la présente invention consiste à réaliser les mesures de perméation de différents gaz de manière simultanée. Pour ce faire, il est nécessaire d'injecter dans la première chambre 11 de l'enceinte de perméation 10 une atmosphère comportant un mélange de plusieurs gaz isotopiques, qui pourront diffuser de manière simultanée à travers le matériau M à étudier. Néanmoins, la réalisation d'une telle atmosphère comportant plusieurs gaz différents nécessite un moyen d'alimentation en gaz particulier que l'on va maintenant décrire en détail.

Le moyen d'alimentation en gaz du dispositif de mesure comprend une ligne principale d'alimentation en gaz 25 par l'intermédiaire de laquelle un mélange de gaz isotopiques va pouvoir être formé, ce mélange de gaz isotopiques étant ensuite injecté dans la première chambre 11 de l'enceinte de perméation 10.

En effet, la ligne d'alimentation en gaz 25 comprend une première et une deuxième extrémité, la deuxième extrémité étant reliée à la première chambre 11 de l'enceinte de perméation 10 par l'intermédiaire d'une vanne 2 qui peut être fermée ou ouverte selon que l'on veut isoler ou non la première chambre 11 de la ligne d'alimentation en gaz 25.

A cette deuxième extrémité, est également reliée une enceinte de mélange 14 par l'intermédiaire d'une vanne 1 permettant également d'isoler ou non l'enceinte de mélange 14 de la ligne d'alimentation en gaz 25. C'est dans cette enceinte de mélange 14 qu'un mélange de gaz isotopiques sera formé avant d'être injecté dans la première chambre 11.

Un module à effet Pelletier 15 est en outre couplé à cette enceinte de mélange 14 pour pouvoir former le mélange de gaz isotopiques. Ce module à effet Pelletier 15 joue le rôle d'un moyen de régulation de phase des espèces présentes dans l'enceinte de mélange 14, utile notamment durant les étapes de pompage nécessaires à l'établissement du mélange. Comme on cherche à obtenir un mélange de gaz isotopiques, on utilisera, pour la mesure de la perméation de la vapeur d'eau, une solution saline d'eau deutérée placée dans un godet au sein de l'enceinte de mélange 14. L'utilisation d'un module à effet Pelletier 15 permettra un contrôle accru de la température de la solution saline en eau deutérée du godet, et du même coup de la transformation de phase (solide ou liquide) de l'eau deutérée. En outre, la nature du sel utilisé dans la solution saline permet d'obtenir une gamme complète d'hygrométrie relative adaptée au mélange désiré. Cela permettra de contrôler la pression partielle amont en vapeur d'eau, cet élément influant bien entendu les valeurs de perméation en vapeur d'eau mais également celles d'autres perméants, comme l'oxygène par exemple, en raison d'effets divers sur le matériau.

Indépendamment du moyen de régulation de phase 15, on peut prévoir un moyen de régulation thermique 33 couplé à l'enceinte de mélange 14 ainsi qu'à l'enceinte de perméation 10 permettant, durant la mesure, de thermostater l'ensemble amont, dont le film F de matériau M, pour étudier notamment les mécanismes de perméation en fonction de la température. En effet, la température influe grandement sur les propriétés barrières du matériau. A ce titre, une sonde thermique 34 sera placée au plus prés du film F.

La première extrémité de la ligne d'alimentation 25 est quant à elle reliée à une source de gaz 16, qui pourra par exemple être une source de gaz isotopique comme l'oxygène 17 ($^{17}O_2$) ou l'oxygène 18 C$^{18}O_2$). Cette source de gaz 16 est reliée à la première extrémité de la ligne d'alimentation en gaz 25 par l'intermédiaire d'une vanne 3 de manière à pouvoir injecter un gaz dans la ligne d'alimentation 25, et donc dans l'enceinte de mélange 14 ou directement dans la première chambre 11. La maîtrise de la pression injectée sera réalisée avec le moyen de mesure de pression 36.

Cette source de gaz 16 pourra être couplée à un moyen de récupération 17 adapté au gaz considéré et permettant de piéger le gaz correspondant présent dans la ligne d'alimentation en gaz 25. On utilisera par exemple un piège à froid tel qu'un piège cryogénique.

Il est à noter que d'autres sources de gaz (non représentées) peuvent être reliées à la première extrémité de la ligne d'alimentation 25. On pourra par exemple prévoir des sources pour d'autres gaz dont on cherche à déterminer directement la perméation à travers le matériau M, mais aussi toute autre source de gaz, isotopique ou non, permettant de réaliser le mélange destiné à être injecté dans la première chambre 11.

Un moyen de pompe 18 est également relié à la première extrémité de la ligne d'alimentation 25 par l'intermédiaire d'une vanne 8. Ce moyen de pompe 18 permettra, le moment voulu, de faire le vide dans la ligne d'alimentation en gaz 25. Ce sera par exemple le cas avant d'injecter le mélange de gaz isotopiques dans la première chambre 11, mais également quand on voudra analyser de nouveaux matériaux M. On utilisera par exemple un pompe primaire sèche.

Enfin, on peut également prévoir sur la ligne d'alimentation 25 un moyen de filtrage 19 prévu pour assécher les gaz circulant dans la ligne d'alimentation 25, notamment à l'issue des mesures réalisées sur le matériau M. Ainsi, ce moyen de filtrage 19 comprend une entrée et une sortie reliées à la ligne d'alimentation 25 respectivement par une vanne 4 et une vanne 5. En outre, une vanne 6 est placée sur la ligne d'alimentation 25 entre la vanne 4 et la vanne 5 pour court-circuiter la ligne d'alimentation en gaz si nécessaire. Le moyen de filtrage 19 pourra par exemple être un tamis moléculaire permettant de piéger les molécules d'eau des gaz circulant dans la ligne d'alimentation 25.

La description détaillée qui suit d'une mesure combinée de la perméation de la vapeur d'eau et de l'oxygène à travers un matériau M à analyser permet d'illustrer le fonctionnement du dispositif de mesure, et plus particulièrement du moyen d'alimentation en gaz particulier qui permet une injection d'un mélange de gaz isotopiques dans la première chambre 11.

Une étape préalable à la mesure, et nécessaire à toute analyse d'un matériau M, est la mise en place du film échantillon F de matériau M à analyser dans l'enceinte de perméation 10. Pour ce faire, on va d'abord fermer l'ensemble des vannes du dispositif de mesure. On place ensuite le film échantillon F à analyser sur le fritté métallique 13 et on le fixe dans l'enceinte de perméation 10 avec l'anneau de serrage 28 du mécanisme de fixation. Une fois le film échantillon F fixé dans l'enceinte de perméation 10, on peut fermer cette enceinte.

Il convient alors de créer un vide secondaire en aval du film échantillon F à l'aide des pompes primaire 23 et secondaire 22 du moyen d'analyse. On peut prévoir, lors des changements de films échantillons F, la fermeture de la vanne 31, ce qui permet de maintenir le vide secondaire dans l'enceinte 20 et de limiter la contamination à la chambre 12. Ce système permet de limiter la pollution de la chambre d'analyse, même si, avant de recréer un vide primaire dans la chambre 12, il convient de repasser en vide primaire dans l'enceinte 20 afin de ne pas échauffer la pompe secondaire. Ainsi, pour créer un vide primaire (de l'ordre de $10^{-3}$ torr) en aval du film échantillon F, il suffit de couper la pompe secondaire 22 et d'ouvrir la vanne 31. Une fois le vide primaire atteint dans l'enceinte 20 et la chambre 12, la pompe secondaire 22 permet d'atteindre un vide secondaire de l'ordre de $10^{-7}$ torr dans l'ensemble 20 et 12.

Pendant que le vide secondaire est ainsi réalisé en aval du film échantillon F, on peut former le mélange de gaz isotopiques au sein de l'enceinte de mélange 14 avant de l'injecter dans la première chambre 11 de l'enceinte de perméation 10. Dans notre exemple, on réalise une atmosphère comprenant un mélange de vapeur d'eau deutérée et d'oxygène 18, de manière à pouvoir ensuite réaliser simultanément des analyses de la perméation de l'eau deutérée et de l'oxygène 18 à travers le film échantillon F.

La première étape consiste à mettre en place une solution saline saturée d'eau deutérée dans un godet placé dans l'enceinte de mélange 14. Cette solution est ensuite gelée avec le module à effet Pelletier 15 qui est couplé à l'enceinte de mélange 14. On ouvre ensuite les vannes 1, 2, 4, 5, 6, 7 et 9 et on active la pompe primaire sèche 18 pour mettre sous vide la ligne d'alimentation en gaz 25 mais également l'enceinte de mélange 14, le moyen de filtrage 19, et la première chambre 11.

On ferme ensuite les vannes 2, 4, 5 et 9 et on ouvre la vanne 3 pour ouvrir la source de gaz, qui est en l'espèce une source en oxygène 18, de manière à remplir l'enceinte de mélange 14 avec une certaine quantité d'oxygène 18. La pression injectée est contrôlée avec le moyen de mesure de pression 36.

On ferme ensuite la vanne 1 et on active le piège cryogénique 17 couplé à la source de gaz 16 de manière à récupérer l'oxygène 18 restant dans la ligne d'alimentation 25 pour le piéger dans la source 16 en oxygène 18.

On ferme ensuite les vannes 3, 6, et 7 et on laisse le mélange s'équilibrer au sein de l'enceinte de mélange 14 après avoir dégelé le godet d'eau avec le module à effet Pelletier 15. On pourra par exemple laisser le mélange eau deutérée/oxygène 18 s'équilibrer pendant environ 24 heures.

Une fois que le mélange de gaz isotopiques est formé et l'enceinte de mélange 14 et la chambre de perméation 10 ont été thermostatées à la température voulue à l'aide du moyen de régulation thermique 33, on peut commencer les mesures. Pour ce faire, on ouvre les vannes 1 et 2 de manière à ce que le mélange de l'enceinte de mélange 14 emplisse la première chambre 11 et que le processus de perméation à travers le film échantillon F commence. On utilise un capteur de pression 26 situé sur la première chambre 11 pour contrôler la pression totale du mélange de gaz isotopiques dans la première chambre 11.

Les mesures simultanées des différents flux de perméation de l'eau deutérée et de l'oxygène 18 sont réalisées par le spectromètre 21.

Comme expliqué ci dessus, le flux de perméation augmente jusqu'à se stabiliser et on peut, une fois le régime permanent atteint, déterminer la pression partielle de chacun des gaz isotopiques suivis.

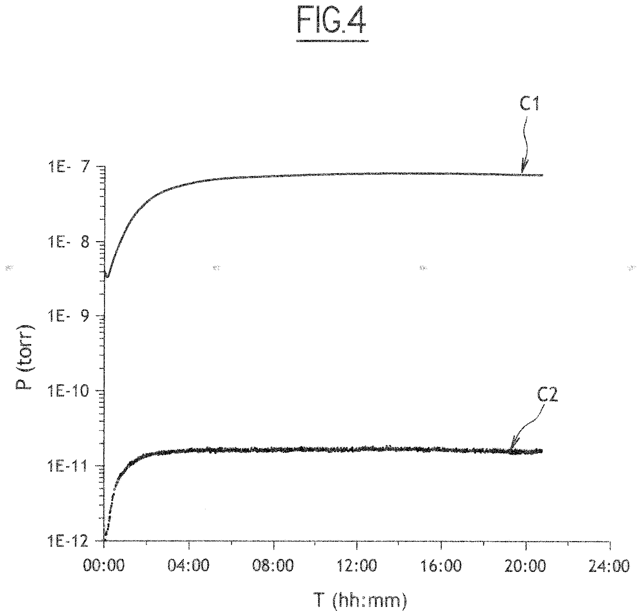

La figure 4 présente un exemple de courbes d'évolution de la pression partielle (en torr) en eau deutérée (courbe C1) et en oxygène 18 (courbe C2) en fonction du temps (en hh:mm). Ces courbes de résultats sont issues d'une mesure combinée eau deutérée/oxygène 18 sur un film d'un matériau polymère revêtu d'une couche inorganique avec une atmosphère comprenant un mélange de gaz isotopiques issu d'une solution saline saturée en NaCl fixant un taux d'hygrométrie de 80% et une quantité d'oxygène 18 correspondant à une pression de 700 torr. L'ensemble est thermostaté à 23°C. Le dispositif avait été au préalable étalonné avec des films de référence de perméabilité connue.

Une fois les flux de l'eau deutérée et de l'oxygène 18 à travers le matériau M stabilisés, il convient de purger la première chambre 11 du mélange de gaz isotopiques. Pour ce faire, on pourra prévoir un moyen de purge quelconque au niveau de la première chambre 11 de sorte que le mélange de gaz isotopiques soit par exemple rejeté dans l'atmosphère environnant.

Une autre solution, qui est préférée mais pas obligatoire, consiste à récupérer le mélange de gaz isotopiques et à isoler chacun des gaz le constituant. Cette récupération sera notamment possible grâce au moyen de filtrage 19.

Ainsi, pour récupérer le mélange de gaz isotopiques, on procédera d'abord à la congélation de la solution de l'enceinte de mélange 14 avec le module à effet Pelletier 15.

On ferme ensuite la vanne 6 et on ouvre les vannes 3, 4, 5, et 7 de façon à faire passer le mélange de gaz isotopiques à travers le moyen de filtrage 19 qui pourra par exemple être un tamis moléculaire destiné à retirer les molécules d'eau présentes dans le mélange.

Le mélange de gaz ayant été asséché, il ne reste, dans ce cas, que de l'oxygène 18 qui peut être piégé dans la source de gaz 16 grâce au piège cryogénique 17 prévu à cet effet, avant de fermer la vanne 3.

Ce processus de récupération des gaz permet non seulement une économie des gaz utilisés mais permet également de réduire la pollution due au rejet des gaz dans l'environnement.

L'activation de la pompe primaire sèche 18 permettra éventuellement de purger complètement la ligne d'alimentation en gaz 25, le moyen de filtrage 19, et la première chambre 11.

Comme on l'a dit précédemment, ces mesures combinées eau deutérée/oxygène 18 peuvent être conditionnées par une analyse préalable de la perméation de l'hélium à travers le film échantillon F du matériau M à analyser. Dans le cas où les analyses de perméation de l'hélium à travers le matériau M révèlent que les propriétés du matériau M ne sont pas satisfaisantes, il sera possible de ne pas analyser le matériau plus en détail, notamment en ce qui concerne la perméabilité du matériau M à l'eau et à l'oxygène.

Si les mesures de perméation de hélium sont au contraire satisfaisantes, le dispositif de mesure permet d'effectuer les analyses ultérieures de la perméation de l'eau et de l'oxygène sur le même film échantillon M, sans avoir à modifier la configuration du dispositif de mesure.

En effet, il suffit de prévoir une source en hélium reliée à la première extrémité de la ligne d'alimentation en gaz 25 par l'intermédiaire d'une vanne. Cette source permettra ainsi de créer une atmosphère contrôlée en hélium au sein de la première chambre pour mesurer la perméation en hélium du film échantillon F considéré. Il convient ensuite de récupérer l'hélium restant dans la première chambre 11 à l'issue des analyses de la perméation de l'hélium et de purger avec la pompe primaire sèche 18 la ligne d'alimentation en gaz 25 et la première chambre 11. Les mesures combinées en eau deutérée et en oxygène 18, et notamment la phase préalable de formation du mélange de gaz isotopiques pourra donc commencer.

Le dispositif de mesure de perméation décrit présente donc l'avantage de pouvoir réaliser l'ensemble des mesures de perméation sur un même film échantillon F de dimensions modestes au regard des appareils commerciaux sans créer d'écarts trop importants en ce qui concerne les conditions expérimentales des analyses de perméation successives.

En outre, on peut prévoir, à l'issue des analyses combinées de perméation en eau deutérée et en oxygène 18, de procéder à une nouvelle analyse de la perméation de hélium à travers le film échantillon F de manière à pouvoir corréler les résultats et ainsi prendre en compte les changements structurels qu'aurait pu subir le film F au cours des analyses successives.

De tels procédé et dispositif pour des mesures simultanées de perméation de gaz isotopiques à travers un matériau sont particulièrement intéressants dans les cas de la sélection de matériaux pour l'encapsulation de cellules solaires organiques par exemple. En effet, le dispositif permet des mesures selon une sensibilité accrue, de l'ordre de $10^{-5}$g/m$^2$.j pour la vapeur d'eau. Bien sûr, l'utilisation des procédé et dispositif de mesure décrits n'est pas limitée à l'encapsulation de cellules solaires organiques et pourra s'étendre à toute application qui nécessite des mesures de flux surfaciques avec des seuils très faibles.

## Revendications

1. Procédé de mesure de perméation de gaz à travers un matériau (M), **caractérisé en ce qu'**il comprend les étapes consistant à :

   ▪ Former un mélange de gaz isotopiques, contenant de la vapeur d'eau deutérée et au moins un autre gas isotopique, dans une enceinte de mélange (14), chaque gaz isotopique correspondant, avec un nombre de masse différent, à un gaz cible différent dont on cherche à connaître la perméation à travers le matériau (M), le gaz isotopique ayant une abondance naturelle inférieure au gaz cible correspondant ;

   ▪ Remplir, avec le mélange de gaz isotopiques, une première chambre (11) d'une enceinte de perméation (10) comprenant une première (11) et une deuxième chambre (12), la première chambre (11) étant séparée de la deuxième (12) chambre par le matériau (M) ;

   ▪ Analyser simultanément les gaz isotopiques ayant traversé le matériau (M) par perméation et étant présents dans la deuxième chambre (12), pour calculer simultanément la perméation du matériau (M) à chacun des gaz cibles correspondants ;

dans lequel l'étape de formation du mélange de gaz isotopiques consiste à remplir l'enceinte de mélange (14) avec au moins un gaz isotopique, autre que la vapeur d'eau deutérée, provenant d'une source de gaz (16), à fermer l'enceinte de mélange (14), à réguler le mélange en vapeur d'eau deutérée par un moyen de régulation de phase (15), et à équilibrer le mélange.

2. Procédé selon la revendication 1, **caractérisé en ce que** l'on remplit l'enceinte de mélange (14) avec un gaz isotopique choisi parmi $^{18}O_2$ et $^{17}O_2$ lorsque l'un des gaz cibles est $^{16}O_2$.

3. Procédé selon l'une quelconque des revendications 1 à 2, **caractérisé en ce que** l'étape de remplissage de la première chambre (11) consiste à faire le vide dans la première chambre (11) avec un premier moyen de pompe (18), puis à ouvrir l'enceinte de mélange (14) pour remplir la première chambre (11) avec le mélange de gaz isotopiques.

4. Procédé selon l'une quelconque des revendications 1 à 3, **caractérisé en ce qu'**il comprend en outre une étape de régulation thermique préalable à l'étape d'analyse, l'étape de régulation thermique consistant à réguler la température de l'enceinte de perméation (10) et de l'enceinte de mélange (14) avec un moyen de régulation thermique (33).

5. Procédé selon l'une quelconque des revendications 1 à 4, **caractérisé en ce que** l'étape d'analyse consiste à déterminer simultanément la présence de gaz isotopiques dans la deuxième chambre (12) avec un analyseur (21) de gaz placé dans une enceinte de mesure (20), l'enceinte de mesure (20) étant reliée à la deuxième chambre (12) et mise sous vide continu avec un deuxième moyen de pompe (22,23).

6. Procédé selon la revendication 5, **caractérisé en ce qu'**il comprend en outre une étape préalable à l'étape d'analyse consistant à mettre sous vide la deuxième chambre (12) et l'enceinte de mesure (20) avec le deuxième moyen de pompe (22,23).

7. Procédé selon l'une quelconque des revendications 1 à 6, **caractérisé en ce qu'**il comprend en outre une étape de récupération des gaz consistant à, une fois l'analyse de perméation terminée, récupérer le mélange de gaz de la première chambre (11) et l'acheminer vers un moyen de filtrage (19) pour assécher les gaz du mélange.

8. Procédé selon la revendication 7, **caractérisé en ce que** l'étape de récupération des gaz comprend en outre une étape consistant à piéger les gaz asséchés du mélange dans la source de gaz (16) correspondante avec un moyen de récupération (17) du gaz considéré.

9. Procédé selon l'une quelconque des revendications 1 à 8, **caractérisé en ce qu'**il comprend en outre une étape préalable de test, consistant remplir la première chambre (11) avec de l'hélium, et à calculer la perméation du matériau (M) à l'hélium, pour effectuer une présélection du matériau (M) en excluant le matériau (M) des analyses ultérieures si la perméation du matériau (M) à l'hélium est supérieure à un seuil déterminé.

10. Dispositif de mesure de perméation de gaz à travers un matériau (M), comprenant :

   ■ Une enceinte de perméation (10) comprenant une première (11) et une deuxième (12) chambre séparées par le matériau (M),
   ■ Un moyen d'analyse de gaz pour analyser les gaz ayant traversé le matériau (M) par perméation et étant présents dans la deuxième chambre (12),

   **caractérisé en ce qu'**il comprend en outre une enceinte de mélange (14) pour former un mélange de gaz isotopiques, contenant de la vapeur d'eau deutérée et au moins un autre gas isotopique, chaque gaz isotopique correspondant, avec un nombre de masse différent, à un gaz cible différent dont on cherche à connaître la perméation à travers le matériau (M), le gaz isotopique ayant une abondance naturelle inférieure au gaz cible correspondant, l'enceinte de mélange (14) étant reliée à la première chambre (11) pour remplir la première chambre (11) avec le mélange de gaz isotopiques, de sorte que le moyen d'analyse calcule simultanément la perméation du matériau (M) à chacun des gaz cibles correspondants,
   dans lequel l'enceinte de mélange (14) est en outre reliée à un moyen de régulation de phase (15) d'espèces de l'enceinte de mélange (14) prévu pour réguler la température d'une solution saline saturée d'eau deutérée.

11. Dispositif selon la revendication 10, **caractérisé en ce qu'**il comprend en outre une ligne d'alimentation (25) en gaz comprenant une première et une deuxième extrémité, la première extrémité étant reliée à au moins une source de gaz isotopique (16), et la deuxième extrémité étant reliée à la première chambre (11) et à l'enceinte de mélange (14) pour remplir la première chambre (11) et/ou l'enceinte de mélange (14).

**12.** Dispositif selon la revendication 11, **caractérisé en ce que** la ligne d'alimentation (25) est reliée à l'enceinte de mélange (14), à la première chambre (11), et à la source de gaz (16) respectivement par l'intermédiaire d'une première vanne (1), d'une deuxième vanne (2), et d'une troisième vanne (3).

**13.** Dispositif selon l'une quelconque des revendications 11 ou 12, **caractérisé en ce que** la source de gaz (16) est en outre reliée à un moyen de récupération (17) du gaz considéré.

**14.** Dispositif selon la revendication 13, **caractérisé en ce que** le moyen de récupération (17) est un piège cryogénique.

**15.** Dispositif selon l'une quelconque des revendications 11 à 14, **caractérisé en ce que** la ligne d'alimentation (25) est en outre reliée à un moyen de filtrage (19) pour assécher les gaz circulant dans la ligne d'alimentation (25).

**16.** Dispositif selon la revendication 15, **caractérisé en ce que** le moyen de filtrage (19) est un tamis moléculaire pour piéger les molécules d'eau des gaz circulant dans la ligne d'alimentation (25).

**17.** Dispositif selon l'une quelconque des revendications 15 ou 16, **caractérisé en ce que** le moyen de filtrage (19) comprend une entrée et une sortie, l'entrée et la sortie étant respectivement reliées à la ligne d'alimentation (25) par l'intermédiaire d'une quatrième (4) et d'une cinquième (5) vanne, la ligne d'alimentation (25) comprenant en outre une sixième vanne (6) placée entre la quatrième (4) et la cinquième (5) vanne pour court-circuiter la ligne d'alimentation (25).

**18.** Dispositif selon la revendication 17, **caractérisé en ce que** la ligne d'alimentation (25) comprend en outre une septième vanne (7) interposée au niveau de la deuxième extrémité avant les première (1) et deuxième (2) vannes pour isoler la ligne d'alimentation (25) de l'enceinte de mélange (14) et de la première chambre (11) de l'enceinte de perméation (10).

**19.** Dispositif selon l'une quelconque des revendications 11 à 18, **caractérisé en ce que** la ligne d'alimentation (25) est en outre reliée, au niveau de la première extrémité, par l'intermédiaire d'une neuvième vanne (9), à un premier moyen de pompe (18) pour faire le vide dans la ligne d'alimentation (25).

**20.** Dispositif selon l'une quelconque des revendications 10 à 19, **caractérisé en ce que** le moyen de régulation de phase (15) est un module à effet Pelletier.

**21.** Dispositif selon l'une des revendications 10 à 20, **caractérisé en ce qu'**il comprend en outre un moyen de régulation thermique (33) pour réguler la température de l'enceinte de perméation (10) et l'enceinte de mélange (14).

**22.** Dispositif selon l'une quelconque des revendications 10 à 21, **caractérisé en ce que** le moyen d'analyse comprend un analyseur (21) placé dans une enceinte de mesure (20) comprenant une première et une deuxième extrémité, la première extrémité étant reliée à la deuxième chambre (12), et la deuxième extrémité étant reliée à un deuxième moyen de pompe (22,23) pour mettre l'enceinte de mesure sous vide.

**23.** Dispositif selon la revendication 22, **caractérisé en ce que** la première extrémité de l'enceinte de mesure (20) est reliée à la deuxième chambre (12) par l'intermédiaire d'une dixième vanne (31).

**24.** Dispositif selon l'une quelconque des revendications 22 ou 23, **caractérisé en ce que** le deuxième moyen de pompe (22,23) comprend une pompe primaire (23) et une pompe secondaire (22) placées en série.

**25.** Dispositif selon l'une quelconque des revendications 22 à 24, **caractérisé en ce que** l'analyseur (21) est un spectromètre de masse.

**26.** Dispositif selon la revendication 25, **caractérisé en ce que** le spectromètre de masse est positionné sur le chemin du flux de gaz entre la deuxième chambre (12) et les pompes (22,23).

**27.** Procédé d'utilisation du dispositif de mesure de perméation selon l'une quelconque des revendications 23 à 26, **caractérisé en ce qu'**il comprend les étapes consistant à :

- Mettre en place un film échantillon (F) d'un matériau (M) à mesurer dans l'enceinte de perméation (10), et fermer toutes les vannes du dispositif ;
- Ouvrir la dixième vanne (31) et la onzième vanne (32) et mettre la deuxième chambre (12) sous vide avec le deuxième moyen de pompe (22,23) ;
- Mettre en place la solution saline saturée d'eau deutérée dans l'enceinte de mélange (14) et geler la solution avec le module à effet Pelletier (15) ;
- Ouvrir les première (1), deuxième (2), quatrième (4), cinquième (5), sixième (6), septième (7), et neuvième (9) vannes et mettre sous vide la première chambre (11), la ligne d'alimentation (25), l'enceinte de mélange (14), et le moyen de filtrage (19) avec le premier moyen de pompe (18) ;

- Fermer les deuxième (2), quatrième (4), cinquième (5), et neuvième (9) vannes ;
- Ouvrir la troisième vanne (3) pour remplir l'enceinte de mélange (14) avec un gaz isotopique de la source de gaz isotopique (16) ;
- Fermer la première vanne (1) et récupérer le gaz isotopique de la ligne d'alimentation (25) avec le moyen de récupération (17) ;
- Fermer les troisième (3), sixième (6), et septième (7) vannes et laisser le mélange s'équilibrer ;
- Ouvrir les première (1) et deuxième (2) vannes et calculer simultanément la perméation du matériau (M) à chacun des gaz cibles avec le moyen d'analyse.

28. Procédé d'utilisation selon la revendication 27, **caractérisé en ce qu'**il comprend en outre les étapes consistant à :

- Geler la solution saline avec le module à effet Pelletier (15) ;
- Fermer la sixième vanne (6) et ouvrir les troisième (3), quatrième (4), cinquième (5), et septième (7) vannes, et assécher les gaz avec le moyen de filtrage (19) ;
- Récupérer les gaz asséchés avec le moyen de récupération (17) et fermer la troisième vanne (3).

**Patentansprüche**

1. Verfahren zur Messung der Permeation von Gas durch ein Material (M), **dadurch gekennzeichnet, dass** es die Schritte umfasst, die darin bestehen:

- Bilden eines Gemischs isotopischer Gase, das deuterierten Wasserdampf und mindestens ein anderes isotopisches Gas enthält, in einem Mischbehälter (14), wobei jedes isotopische Gas mit einer unterschiedlichen Massenzahl einem Zielgas entspricht, dessen Permeation durch das Material (M) ermittelt werden soll, wobei das isotopische Gas eine niedrigere natürliche Abundanz als das entsprechende Zielgas hat;
- Füllen, mit dem Gemisch isotopischer Gase, einer ersten Kammer (11) eines Permeationsbehälters (10), umfassen eine erste (11) und eine zweite Kammer (12), wobei die erste Kammer (11) von der zweiten Kammer (12) durch das Material (M) getrennt ist;
- gleichzeitiges Analysieren der isotopischen Gase, die das Material (M) durch Permeation durchquert haben und in der zweiten Kammer (12) vorhanden sind, um gleichzeitig die Permeation des Materials (M) für jedes der entsprechenden Zielgase zu berechnen;

wobei der Schritt des Bildens des Gemischs isotopischer Gase darin besteht, den Mischbehälter (14) mit mindestens einem isotopischen Gas zu füllen, das nicht der deuterierte Wasserdampf ist, das von einer Gasquelle (16) kommt, den Mischbehälter (14) zu schließen, das deuterierte Wasserdampfgemisch mit einem Phasenregulationsmittel (15) einzustellen und das Gemisch auszugleichen.

2. Verfahren nach Anspruch 1, **dadurch gekennzeichnet, dass** der Mischbehälter (14) mit einem isotopischen Gas gefüllt wird, das aus $^{18}O_2$ und $^{17}O_2$ ausgewählt ist, wenn eines der Zielgase $^{16}O_2$ ist.

3. Verfahren nach einem der Ansprüche 1 bis 2, **dadurch gekennzeichnet, dass** der Schritt des Füllens der ersten Kammer (11) darin besteht, die erste Kammer (11) mit einem ersten Pumpenmittel (18) in Vakuum zu versetzen, dann den Mischbehälter (14) zu öffnen, um die erste Kammer (11) mit dem Gemisch isotopischer Gase zu füllen.

4. Verfahren nach einem der Ansprüche 1 bis 3, **dadurch gekennzeichnet, dass** es ferner einen Schritt der thermischen Regulierung vor dem Analyseschritt umfasst, wobei der Schritt der thermischen Regulierung darin besteht, die Temperatur des Permeationsbehälters (10) und des Mischbehälters (14) mit einem thermischen Regulierungsmittel (33) zu regeln.

5. Verfahren nach einem der Ansprüche 1 bis 4, **dadurch gekennzeichnet, dass** der Analyseschritt darin besteht, gleichzeitig das Vorhandensein von isotopischen Gasen in der zweiten Kammer (12) mit einem Gasanalysator (21) zu bestimmen, der in einem Messraum (20) platziert ist, wobei der Messraum (20) mit der zweiten Kammer (12) verbunden und mit einem zweiten Pumpenmittel (22, 23) in kontinuierliches Vakuum versetzt ist.

6. Verfahren nach Anspruch 5, **dadurch gekennzeichnet, dass** es ferner einen Schritt vor dem Analyseschritt umfasst, der darin besteht, die zweite Kammer (12) und den Messraum (20) mit dem zweiten Pumpenmittel (22, 23) in Vakuum zu versetzen.

7. Verfahren nach einem der Ansprüche 1 bis 6, **dadurch gekennzeichnet, dass** es ferner einen Rückgewinnungsschritt der Gase umfasst, der darin besteht, nach beendeter Permeationsanalyse das Gasgemisch der ersten Kammer (11) rückzugewinnen und es zu einem Filtermittel (19) zu befördern, um die Gase des Gemischs zu trocknen.

8. Verfahren nach Anspruch 7, **dadurch gekenn-**

**zeichnet, dass** der Rückgewinnungsschritt der Gase ferner einen Schritt umfasst, der darin besteht, die getrockneten Gase des Gemischs in der entsprechenden Gasquelle (16) mit einem Rückgewinnungsmittel (17) des betreffenden Gases einzufangen.

9. Verfahren nach einem der Ansprüche 1 bis 8, **dadurch gekennzeichnet, dass** es ferner einen vorherigen Testschritt umfasst, der darin besteht, die erste Kammer (11) mit Helium zu füllen und die Permeation des Materials (M) gegenüber Helium zu berechnen, um einen Vorauswahl des Materials (M) bei Ausschluss des Materials (M) der vorherigen Analysen durchzuführen, wenn die Permeation des Materials (M) gegenüber Helium über einem bestimmten Grenzwert liegt.

10. Vorrichtung zur Messung der Permeation von Gas durch ein Material (M), umfassend:

   - einen Permeationsbehälter (10), umfassend eine erste (11) und eine zweite Kammer (12), die durch das Material (M) getrennt sind, ein Gasanalysemittel, um die Gase zu analysieren, die das Material (M) durch Permeation durchquert haben und in der zweiten Kammer (12) vorhanden sind,

   **dadurch gekennzeichnet, dass** sie ferner einen Mischbehälter (14) umfasst, um ein Gemisch isotopischer Gase zu bilden, das deuterierten Wasserdampf und mindestens ein anderes isotopisches Gas enthält, wobei jedes isotopische Gas mit einer unterschiedlichen Massenzahl einem Zielgas entspricht, dessen Permeation durch das Material (M) ermittelt werden soll, wobei das isotopische Gas eine niedrigere natürliche Abundanz als das entsprechende Zielgas hat,
   wobei der Mischbehälter (14) mit der ersten Kammer (11) verbunden ist, um die erste Kammer (11) mit dem Gemisch isotopischer Gase derart zu füllen, dass das Analysemittel gleichzeitig die Permeation des Materials (M) für jedes der entsprechende Zielgase berechnet,
   wobei der Mischbehälter (14) ferner mit einem Phasenregulationsmittel (15) von Spezies des Mischbehälters (14) verbunden ist, das zur Temperaturregulierung einer mit deuteriertem Wasser gesättigten Salzlösung vorgesehen ist.

11. Vorrichtung nach Anspruch 10, **dadurch gekennzeichnet, dass** sie ferner eine Gasversorgungsleitung (25) umfasst, die ein erstes und ein zweites Ende umfasst, wobei das erste Ende mit mindestens einer isotopischen Gasquelle (16) verbunden ist, und das zweite Ende mit der ersten Kammer (11) und mit dem Mischbehälter (14) verbunden ist, um die erste Kammer (11) und/oder den Mischbehälter (14) zu füllen.

12. Vorrichtung nach Anspruch 11, **dadurch gekennzeichnet, dass** die Versorgungsleitung (25) mit dem Mischbehälter (14), mit der ersten Kammer (11) und mit der Gasquelle (16) jeweils über ein erstes Ventil (1), ein zweites Ventil (2) und ein drittes Ventil (3) verbunden ist.

13. Vorrichtung nach einem der Ansprüche 11 oder 12, **dadurch gekennzeichnet, dass** die Gasquelle (16) ferner mit einem Rückgewinnungsmittel (17) des entsprechenden Gases verbunden ist.

14. Vorrichtung nach Anspruch 13, **dadurch gekennzeichnet, dass** das Rückgewinnungsmittel (17) eine Kühlfalle ist.

15. Vorrichtung nach einem der Ansprüche 11 bis 14, **dadurch gekennzeichnet, dass** die Versorgungsleitung (25) ferner mit einem Filtermittel (19) verbunden ist, um die in der Versorgungsleitung (25) zirkulierenden Gase zu trocknen.

16. Vorrichtung nach Anspruch 15, **dadurch gekennzeichnet, dass** das Filtermittel (19) ein Molekularsieb ist, um die Wassermoleküle der in der Versorgungsleitung (25) zirkulierenden Gase zu fangen.

17. Vorrichtung nach einem der Ansprüche 15 oder 16, **dadurch gekennzeichnet, dass** das Filtermittel (19) einen Eingang und einen Ausgang umfasst, wobei der Eingang und der Ausgang jeweils mit der Versorgungsleitung (25) über ein viertes (4) und ein fünftes (5) Ventil verbunden sind, wobei die Versorgungsleitung (25) ferner ein sechstes Ventil (6) umfasst, das zwischen dem vierten (4) und dem fünften (5) Ventil platziert ist, um die Versorgungsleitung (25) kurzzuschließen.

18. Vorrichtung nach Anspruch 17, **dadurch gekennzeichnet, dass** die Versorgungsleitung (25) ferner ein zwischengestelltes siebentes Ventil (7) im Bereich des zweiten Endes vor dem ersten (1) und zweiten (2) Ventil umfasst, um die Versorgungsleitung (25) vom Mischbehälter (14) und von der ersten Kammer (11) des Permeationsbehälters (10) zu isolieren.

19. Vorrichtung nach einem der Ansprüche 11 bis 18, **dadurch gekennzeichnet, dass** die Versorgungsleitung (25) ferner im Bereich des ersten Endes über ein neuntes Ventil (9) mit einem ersten Pumpenmittel (18) verbunden ist, um die Versorgungsleitung (25) in Vakuum zu versetzen.

20. Vorrichtung nach einem der Ansprüche 10 bis 19, **dadurch gekennzeichnet, dass** das Phasenregulationsmittel (15) ein Modul mit Pelletier-Effekt ist.

21. Vorrichtung nach einem der Ansprüche 10 bis 20, **dadurch gekennzeichnet, dass** sie ferner ein thermisches Regulierungsmittel (33) umfasst, um die Temperatur des Permeationsbehälters (10) und des Mischbehälters (14) zu regeln.

22. Vorrichtung nach einem der Ansprüche 10 bis 21, **dadurch gekennzeichnet, dass** das Analysemittel einen in einem Messraum (20) platzierten Analysator (21) umfasst, umfassend ein erstes und ein zweites Ende, wobei das erste Ende mit der zweiten Kammer (12) verbunden ist und das zweite Ende mit einem zweiten Pumpenmittel (22, 23) verbunden ist, um den Messraum in Vakuum zu versetzen.

23. Vorrichtung nach Anspruch 22, **dadurch gekennzeichnet, dass** das erste Ende des Messraums (20) mit der zweiten Kammer (12) über ein zehntes Ventil (31) verbunden ist.

24. Vorrichtung nach einem der Ansprüche 22 oder 23, **dadurch gekennzeichnet, dass** das zweite Pumpenmittel (22, 23) eine in Reihe platzierte Primärpumpe (23) und eine Sekundärpumpe (22) umfasst.

25. Vorrichtung nach einem der Ansprüche 22 bis 24, **dadurch gekennzeichnet, dass** der Analysator (21) ein Massenspektrometer ist.

26. Vorrichtung nach Anspruch 25, **dadurch gekennzeichnet, dass** das Massenspektrometer auf dem Weg des Gasstroms zwischen der zweiten Kammer (12) und den Pumpen (22, 23) positioniert ist.

27. Verfahren zur Verwendung einer Vorrichtung zur Messung der Permeation nach einem der Ansprüche 23 bis 26, **dadurch gekennzeichnet, dass** es die Schritte umfasst, die darin bestehen:

- Platzieren eine Probefolie (F) eines zu messenden Materials (M) in den Permeationsbehälter (10) und Schließen aller Ventile der Vorrichtung;
- Öffnen des zehnten Ventils (31) und des elften Ventils (32) und Versetzen der zweiten Kammer (12) in Vakuum mit dem zweiten Pumpenmittel (22, 23);
- Platzieren der mit deuteriertem Wasser gesättigten Salzlösung in den Mischbehälter (14) und Gefrieren der Lösung mit dem Modul mit Pelletier-Effekt (15);
- Öffnen des ersten (1), zweiten (2), vierten (4), fünften (5), sechsten (6), siebenten (7) und neunten (9) Ventils und Versetzen der ersten Kammer (11), der Versorgungsleitung (25), des Mischbehälters (14) und des Filtermittels (19) mit dem ersten Pumpenmittel (18) in Vakuum;
- Schließen des zweiten (2), vierten (4), fünften (5) und neunten (9) Ventils;
- Öffnen des dritten Ventils (3), um den Mischbehälter (14) mit einem isotopischen Gas aus der isotopischen Gasquelle (16) zu füllen;
- Schließen des ersten Ventils (1) und Rückgewinnen des isotopischen Gases aus der Versorgungsleitung (25) mit dem Rückgewinnungsmittel (17);
- Schließen des dritten (3), sechsten (6) und siebenten (7) Ventils und das Gemisch ausgleichen lassen;
- Öffnen des ersten (1) und zweiten (2) Ventils und gleichzeitiges Berechnen der Permeation des Materials (M) für jedes der Zielgase mit dem Analysemittel.

28. Verfahren zur Verwendung nach Anspruch 27, **dadurch gekennzeichnet, dass** es ferner die Schritte umfasst, die darin bestehen:

- Gefrieren der Salzlösung mit dem Modul mit Pelletier-Effekt (15);
- Schließen des sechsten Ventils (6) und Öffnen des dritten (3), vierten (4), fünften (5) und siebenten (7) Ventils und Trocknen der Gase mit dem Filtermittel (19);
- Rückgewinnen der getrockneten Gase mit dem Rückgewinnungsmittel (17) und Schließen des dritten Ventils (3).

**Claims**

1. A method for measuring gases permeation through a material (M), **characterised in that** it comprises the steps of:

• Forming a mixture of isotopic gases, including heavy water vapour and at least another isotopic gas, in a mixing enclosure (14), each isotopic gas corresponding to a target gas for which permeation through the material (M) is sought, the isotopic gas having a mass number different from and a natural isotopic abundance lower than that of the corresponding target gas;
• Filling with the mixture of isotopic gases a first chamber (11) of a permeation enclosure (10) comprising a first chamber (11) and a second chamber (12), the first chamber (11) being separated from the second chamber (12) by the material (M);
• Simultaneously analysing the isotopic gases having permeated through the material (M) and being present in the second chamber (12), in order to simultaneously calculate permeation through the material (M) of each of the corresponding target gases;

wherein the step of forming a mixture of isotopic gases consists in filling the mixing enclosure (14) with at least one isotopic gas, other than the heavy water vapour, originating from a gas source (16), closing the mixing enclosure (14), regulating heavy water vapour in the mixture using a phase regulation means (15), and waiting for the mixture to reach equilibrium.

2. The method of claim 1, **characterised in that** the mixing enclosure (14) is filled with an isotopic gas chosen from among $^{18}O_2$ and $^{17}O_2$ when one of the target gases is $^{16}O_2$.

3. The method of any one of claims 1 to 2, **characterised in that** the step of filling the first chamber (11) consists in creating a vacuum in the first chamber (11) with a first pumping means (18), then opening the mixing enclosure (14) to fill the first chamber (11) with the mixture of isotopic gases.

4. The method of any one of claims 1 to 3, **characterised in that** it further comprises a step of thermal regulation prior to the analysis step, the thermal regulation step consisting in regulating the temperature of the permeation enclosure (10) and the mixing enclosure (14) with a temperature regulation means (33).

5. The method of any one of claims 1 to 4, **characterised in that** the analysis step consists in simultaneously determining the presence of isotopic gases in the second chamber (12) with a gas analyser (21) located in a measurement enclosure (20), the measurement enclosure (20) being connected to the second chamber (12) and kept under a continuous vacuum using a second pumping means (22, 23).

6. The method of claim 5, **characterised in that** it further comprises a step prior to the analysis step consisting in creating a vacuum in the second chamber (12) and the measurement enclosure (20) using the second pumping means (22, 23).

7. The method of any one of claims 1 to 6, **characterised in that** it further includes a gas recovery step, consisting in recovering the mixture of isotopic gases from the first chamber (11) once the permeation analysis has been finished, and transferring the mixture to a filter means (19) in order to dry gases of the mixture.

8. The method of claim 7, **characterised in that** the gas recovery step further includes a step consisting in trapping dried gases from the mixture in the corresponding gas source (16) with a recovery means (17) adapted for recovering the corresponding gas.

9. The method of any one of claims 1 to 8, **characterised in that** it further includes a preliminary test step consisting in filling the first chamber (11) with helium and calculating helium permeation through the material (M), in order to preselect the material (M) by excluding the material (M) from subsequent analyses if helium permeation through the material (M) is greater than a determined threshold.

10. A device for measuring gas permeation through a material (M), comprising:

   • a permeation enclosure (10) comprising a first chamber (11) and a second chamber (12) separated by the material (M),
   • a gas analysis means for analysis of the gases having permeated through the material (M) and being present in the second chamber (12),

   **characterised in that** it further comprises a mixing enclosure (14) to form a mixture of isotopic gases, including heavy water vapour and at least another isotopic gas, each isotopic gas corresponding to a target gas for which permeation through the material (M) is sought, the isotopic gas having a mass number different from and a natural isotopic abundance lower than that of the corresponding target gas, the mixing enclosure (14) being connected to the first chamber (11) to fill the first chamber (11) with the mixture of isotopic gases, such that the analysis means simultaneously calculates permeation through the material (M) of each of the corresponding target gases, wherein the mixing enclosure (14) is further connected to a phase regulation means (15) for regulating the phase of the species in the mixing enclosure (14) configured to regulate the temperature of a saline solution saturated in heavy water.

11. The device of claim 10, **characterised in that** it further comprises a gas supply line (25) including first and second ends, the first end being connected to at least one isotopic gas source (16), and the second end being connected to the first chamber (11) and the mixing enclosure (14) in order to fill the first chamber (11) and/or the mixing enclosure (14).

12. The device of claim 11, **characterised in that** the supply line (25) is connected to the mixing enclosure (14), to the first chamber (11), and to the gas source (16) through a first valve (1), a second valve (2), and a third valve (3) respectively.

13. The device of either claim 11 or 12, **characterised in that** the gas source (16) is further connected to a recovery means (17) adapted for recovering the corresponding gas.

14. The device of claim 13, **characterised in that** the recovery means (17) is a cryogenic trap.

15. The device of any one of claims 11 to 14, **characterised in that** the supply line (25) is further connected to a filter means (19) for drying gases circulating in the supply line (25).

16. The device of claim 15, **characterised in that** the filter means (19) is a molecular sieve adapted to trap water molecules in gases circulating in the supply line (25).

17. The device of either claim 15 or 16, **characterised in that** the filter means (19) includes an inlet and an outlet, the inlet and the outlet being connected to the supply line (25) through a fourth valve (4) and a fifth valve (5) respectively, the supply line (25) further including a sixth valve (6) located between the fourth valve (4) and the fifth valve (5) to bypass the supply line (25).

18. The device of claim 17, **characterised in that** the supply line (25) further includes a seventh valve (7) inserted at the second end before the first (1) and second (2) valves, in order to isolate the supply line (25) from the mixing enclosure (14) and from the first chamber (11) of the permeation enclosure (10).

19. The device of any one of claims 11 to 18, **characterised in that** the supply line (25) is further connected to a first pumping means (18) through a ninth valve (9) at the first end, in order to create a vacuum in the supply line (25).

20. The device of any one of claims 11 to 19, **characterised in that** the phase regulation means (15) is a Pelletier effect module.

21. The device of any one of claims 10 to 20, **characterised in that** it further comprises a temperature regulation means (33) for regulating the temperature of the permeation enclosure (10) and the mixing enclosure (14).

22. The device of any one of claims 10 to 21, **characterised in that** the analysis means comprises an analyser (21) located in a measurement enclosure (20) comprising first and second ends, the first end being connected to the second chamber (12), and the second end being connected to a second pumping means (22, 23) to create a vacuum in the measurement enclosure (20).

23. The device of claim 22, **characterised in that** the first end of the measurement enclosure (20) is connected to the second chamber (12) through a tenth valve (31).

24. The device of either claim 22 or 23, **characterised in that** the second pumping means (22, 23) comprises a primary pump (23) and a secondary pump (22) arranged in series.

25. The device of any one of claims 22 to 24, **characterised in that** the analyser (21) is a mass spectrometer.

26. The device of claim 25, **characterised in that** the mass spectrometer is positioned within the gas flow path between the second chamber (12) and the pumps (22, 23).

27. A method for using the permeation measurement device of any one of claims 23 to 26, **characterised in that** it comprises the steps of:

   • Setting up a sample film (F) of a material (M) to be measured in the permeation enclosure (10), and closing all valves of the device;
   • Opening the tenth valve (31) and the eleventh valve (32) and creating a vacuum in the second chamber (12) using the second pumping means (22, 23);
   • Arranging the saline solution saturated in heavy water within the mixing enclosure (14) and freezing the solution using the Peltier effect module (15);
   • Opening the first (1), second (2), fourth (4), fifth (5), sixth (6), seventh (7) and ninth (9) valves and creating a vacuum in the first chamber (11), the supply line (25), the mixing enclosure (14) and the filter means (19) using the first pumping means (18);
   • Closing the second (2), fourth (4), fifth (5) and ninth (9) valves;
   • Opening the third valve (3) to fill the mixing enclosure (14) with an isotopic gas from the isotopic gas source (16);
   • Closing the first valve (1) and recovering the isotopic gas from the supply line (25) using the recovery means (17);
   • Closing the third (3), sixth (6) and seventh (7) valves and waiting for the mixture to reach equilibrium;
   • Opening the first (1) and second (2) valves and simultaneously calculating permeation through the material (M) of each target gas using the analysis means.

28. The method of use of claim 27, **characterised in that** it further comprises the steps of:

   • Freezing the saline solution using the Peltier effect module (15);

• Closing the sixth (6) valve and opening the third (3), fourth (4), fifth (5) and seventh (7) valves, and drying the gases with the filter means (19);

• Recovering dried gases using the recovery means (17), and closing the third valve (3).

## FIG.1

## FIG.2

## FIG.3

## FIG.4